(19) Europäisches Patentamt
European Patent Office
Office européen des brevets

(11) EP 0 576 750 B1

(12) EUROPÄISCHE PATENTSCHRIFT

(45) Veröffentlichungstag und Bekanntmachung des Hinweises auf die Patenterteilung:
09.09.1998 Patentblatt 1998/37

(51) Int Cl.6: H04L 12/56, H04Q 11/04

(21) Anmeldenummer: 92306050.3

(22) Anmeldetag: 30.06.1992

(54) Modifiziertes Leaky-Bucket-Verfahren
Modified "Leaky-Bucket" method
Méthode modifiée de "leaky-bucket"

(84) Benannte Vertragsstaaten:
AT BE CH DE FR GB IT LI NL SE

(43) Veröffentlichungstag der Anmeldung:
05.01.1994 Patentblatt 1994/01

(73) Patentinhaber: SIEMENS AKTIENGESELLSCHAFT
80333 München (DE)

(72) Erfinder: Worster, Thomas
W-8000 München 40 (DE)

(56) Entgegenhaltungen:
EP-A- 0 381 275        EP-A- 0 419 958

• COMPUTER NETWORKS AND ISDN SYSTEMS
Bd. 20, Nr. 1/5, Dezember 1990, AMSTERDAM, NL
Seiten 415 - 423 , XP161300 A. ECKBERG ET AL

**Beschreibung**

Die Erfindung betrifft ein Verfahren, bei dem in einem nach einem asynchronen Übertragungsverfahren übertragenen Nachrichtenzellenstrom, der eine festgelegte Anzahl von Binärzeichen aufweisende Nachrichtenzellen einer Vielzahl von virtuellen Verbindungen führt, die Binärzeichenrate für jede virtuelle Verbindung überwacht und begrenzt wird.

In Breitbandvermittlungssystemen, in denen Informationen im Zuge von virtuellen Verbindungen in Nachrichtenzellen paketiert nach einem asynchronen Übertragungsverfahren übertragen werden, wird bei Aufbau einer jeweiligen virtuellen Verbindung zwischen der betreffenden Teilnehmerstelle und dem Breitbandvermittlungssystem u.a. eine maximale Binärzeichenrate vereinbart. An den Zugangsstellen des Breitbandvermittlungssystems oder an den Vermittlungsabschlußeinrichtungen der Vermittlungsknoten des Breitbandvermittlungssystems muß die Binärzeichenrate für jede virtuelle Verbindung zur Vermeidung von Überlasterscheinungen überwacht und ggf. begrenzt werden. Einrichtungen zur Überwachung und Begrenzung von Binärzeichenraten werden allgemein als Policing-Einrichtungen bezeichnet. Aus einem Aufsatz in "International Zürich Seminar on Digital Communication", März 1986, "New Directions in Communications" A...1-A...8, von J. B. Turner, ist es bekannt, in einem Vermittlungsknoten eines Breitbandvermittlungssystems jeder damit verbundenen Teilnehmerstelle einen Vorwärts-Rückwärts-Zähler zuzordnen, welcher die von der jeweiligen Teilnehmerstelle gesendeten Nachrichtenzellen zählt und den momentanen Zählerstand entsprechend der von der jeweiligen Teilnehmerstelle festgelegten Binärzeichenrate zu bestimmten Zeitpunkten erniedrigt. Überschreitet dabei der momentane Zählerstand einen von der jeweiligen Teilnehmerstelle vorgebbaren Wert, so erkennt der Vermittlungsknoten eine Überlast ("Leaky-Bucket-Verfahren").

Bei einem solchen Leaky-Bucket-Verfahren ist es dann nicht erforderlich,während jedes Nachrichtenzellenzyklus', in dem eine Nachrichtenzelle ankommen kann, die Zählerstände sämtlicher eingerichteter virtueller Verbindungen neu zu berechnen, wenn für jede virtuelle Verbindung der Zeitpunkt der Ankunft der letzten verbindungszugehörigen Nachrichtenzelle abgespeichert wird und nur bei Ankunft einer Nachrichtenzelle der Zählerstand der Verbindung, zu der diese Nachrichtenzelle gehört, neu ermittelt wird. Dabei wird der aktuelle Zählerstand $z_{na}$ für eine virtuelle Verbindung n gemäß dem Ausdruck

$$z_{na} = z_{na-1} - \frac{t-t_{1n}}{t_{dn}} + 1$$

ermittelt, wobei

| | |
|---|---|
| $z_{na-1}$ | den Zählerstand für die virtuelle Verbindung n vor Ankunft der gerade betrachteten Nachrichtenzelle |
| t | den aktuellen Zeitpunkt |
| $t_{1n}$ | den Zeitpunkt der Ankunft der zur gleichen virtuellen Verbindung gehörigen, unmittelbar vorausgehenden Nachrichtenzelle |
| $t_{dn}$ | den kürzesten zulässigen zeitlichen Abstand zweier aufeinanderfolgender, zu der betrachteten virtuellen Verbindung gehöriger Nachrichtenzellen bezeichnet. |

Wird auf diesem Wege ein weiter Bereich von z.B. fünf Größenordnungen von Binärzeichenraten überwacht, so weisen die zu verarbeitenden Zahlenwerte einen entsprechend großen Wertebereich auf, was eine entsprechend große Kapazität des Speichers, in dem die Werte abgespeichert werden, erfordert; darüber hinaus steht eine Verarbeitung von Zahlenwerten mit großem Wertebereich und die Notwendigkeit der Ausführung von Gleitkommaoperationen einer Reduzierung des Zeitbedarfs für die Verarbeitung entgegen.

Der Erfindung liegt das Problem zugrunde, ein Verfahren anzugeben, das die genannten Nachteile zu vermeiden gestattet.

Das Problem wird gelöst durch ein Verfahren zur Überwachung und Begrenzung der Binärzeichenchenrate einer virtuellen Verbindung in einem Übertragungssystem, in dem

- einer Mehrzahl von virtuellen Verbindungen zugehörige Nachrichtenzellen nach einem asynchronen Übertragungsverfahren übertragen werden
- jede Nachrichtenzelle eine festgelegte Anzahl von Binärzeichen aufweist
- für jede virtuelle Verbindung eine Binärzeichenrate $B_{req}$ eingerichtet ist
- für jede virtuelle Verbindung ein Zählerstand vorgehalten wird
- bei Ankunft einer Nachrichtenzelle für die virtuelle Verbindung, zu der diese Nachrichtenzelle gehört, ein aktueller Zählerstand gemäß dem Ausdruck

$$z_{na} = z_{na-1} - \frac{t-t_{1n}}{t_{dn}} + 1$$

ermittelt wird, wobei

| | |
|---|---|
| $z_{na}$ | den aktuellen Zählerstand für die virtuelle Verbindung n |
| $z_{na-1}$ | den Zählerstand für die virtuelle Verbindung n vor Ankunft der gerade betrachteten Nachrichtenzelle |
| t | den aktuellen Zeitpunkt |
| $t_{1n}$ | den Zeitpunkt der Ankunft der zur gleichen virtuellen Verbindung gehörigen, unmittelbar vorausgehenden Nachrichtenzelle |

$t_{dn}$ den kürzesten zulässigen zeitlichen Abstand zweier aufeinanderfolgender, zu der betrachteten virtuellen Verbindung gehöriger Nachrichtenzellen bezeichnet

- bei Überschreiten eines festgelegten Zählerstandes durch den aktuellen Zählerstand die gerade betrachtete Nachrichtenzelle verworfen wird
- bei Nicht-Überschreiten des festgelegten Zählerstandes durch den aktuellen Zählerstand die gerade betrachtete Nachrichtenzelle weitergeleitet wird, wobei zur Abspeicherung des kürzesten zulässigen zeitlichen Abstandes zweier zur gleichen virtuellen Verbindung gehörender Nachrichtenzellen zwei Speicherplätze vorgesehen sind, in deren einem ein Vielfaches des kürzesten zulässigen zeitlichen Abstandes gespeichert ist und in deren anderem der Quotient aus diesem Vielfachen und dem kürzesten zulässigen zeitlichen Abstand selbst gespeichert ist und wobei bei der Ermittlung des aktuellen Zählerstandes zur Darstellung des kürzesten zulässigen zeitlichen Abstandes der Quotient beider Speicherinhalte gebildet wird.

Die Erfindung ermöglicht zum einen eine erhebliche Reduzierung der für jede virtuelle Verbindung benötigten gesamten Speicherkapazität und zum andern eine verbesserte Anpaßbarkeit an die jeweils überwachte Binärzeichenrate.

Weitere vorteilhafte Ausgestaltungen sind in den Unteransprüchen angegeben.

Die Erfindung wird nun in einem Ausführungsbeispiel anhand einer Figur in zum Verständnis erforderlichem Umfang beschrieben.
Dabei zeigt:

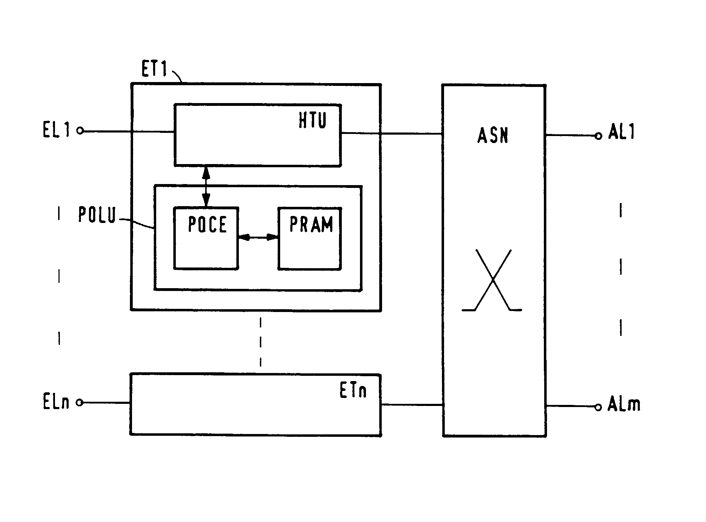

Fig. 1      das Blockschaltbild einer Breitbandvermittlungseinrichtung, in der das erfindungsgemäße Verfahren angewendet wird.

Fig. 1 zeigt eine Breitbandvermittlungseinrichtung, die im Zuge von virtuellen Verbindungen nach einem asynchronen Übertragungsverfahren in Nachrichtenzellenströmen auf Eingangsleitungen EL1...ELn zugeführte Nachrichtenzellen auf Ausgangsleitungen AL1... ALn wahlfrei weiterzuleiten vermag. Die Nachrichtenzellen mögen einer Vielzahl von virtuellen Verbindungen zugehören und weisen jeweils eine festgelegte Anzahl von Binärzeichen auf. Weiter weist jede Nachrichtenzelle einen Nutzdatenteil und einen diesem vorangestellten Nachrichtenzellenkopf auf, der die virtuelle Verbindung bezeichnet, zu der die jeweilige Nachrichtenzelle gehört. Eine auf einer Eingangsleitung ankommende Nachrichtenzelle wird zunächst einer eingangsleitungsleitungsindividuellen Vermittlungsabschlußeinrichtung ETI..ETn zugeführt. Eine gerade ankommende Nachrichtenzelle wird in einem in der Vermittlungsabschlußeinrichtung enthaltenen Umwerter HTU zwischengespeichert. In dem Umwerter wird nach Maßgabe der zugehörigen virtuellen Verbindung die in dem Nachrichtenzellenkopf ebenfalls enthaltene ursprüngliche Zielinformation durch eine neue Zielinformation in an sich bekannter Weise ersetzt. Für jede Nachrichtenzelle wird eine die zugehörige virtuelle bezeichnende Information an eine Überwachungseinrichtung POLU gegeben. In der Überwachtungseinrichtung wird die für jede virtuelle Verbindung im Zuge des Verbindungsaufbaus festgelegte Binärzeichenrate anhand der Nachrichtenzellenrate überwacht und ggf. begrenzt. In der Überwachungseinrichtung wird für jede gerade aufgebaute virtuelle Verbindung ein Zählerstand vorgehalten. Bei jeder Ankunft einer Nachrichtenzelle wird für die virtuelle Verbindung, zu der diese Nachrichtenzelle gehört, ein aktueller Zählerstand gemäß dem Ausdruck

$$z_{na} = z_{na-1} - \frac{t-t_{1n}}{t_{dn}} + 1$$

ermittelt, wobei

$z_{na}$ den aktuellen Zählerstand für die virtuelle Verbindung n,

$z_{na-1}$ den Zählerstand unmittelbar vor Ankunft der gerade betrachteten Nachrichtenzelle,

$t$ den aktuellen Zeitpunkt,

$t_{1n}$ den Zeitpunkt der Ankunft der zur gleichen virtuellen Verbindung gehörenden Nachrichtenzelle, die der gerade betrachteten Nachrichtenzelle unmittelbar vorhergeht,

$t_{dn}$ den gemäß der für die betrachtete virtuelle Verbindung eingerichteten Binärzeichenrate kürzesten zulässigen zeitlichen Abstand zweier aufeinanderfolgender, zu dieser virtuellen Verbindung gehörender Nachrichtenzellen

bezeichnet. Der aktuelle Füllstand entspricht dem Füllstand eines sog. "Leaky-Bucket". Für die Ermittlung des aktuellen Füllstandes sind für jede virtuelle Verbindung in einem Speicher PRAM der bei Ankunft der vorhergehenden Nachrichtenzelle ermittelte Zählerstand, der Zeitpunkt der Ankunft der vorhergehenden Nachrichtenzelle und der gemäß im Zuge des Aufbaus der betrachteten virtuellen Verbindung eingerichteten Binärzeichenrate kürzeste zulässige zeitliche Abstand zweier aufeinanderfolgender Nachrichtenzellen abgespeichert. Bei jeder Ankunft einer Nachrichtenzelle werden die genannten Werte aus dem Speicher in eine Überwachungsausführungseinrichtung POCE übernommen und dort ein aktueller Zählerstand ermittelt. Übersteigt der für eine gerade ankommende Nachrichtenzelle ermittelte aktuelle Zählerstand einen festgelegten maximalen Zählerstand, so wird diese Nachrichtenzelle verworfen, wobei der für die vorhergehende Nachrichtenzelle ermittelte Zählerstand und der Zeitpunkt der Ankunft der vorhergehenden Nachrichtenzelle wieder in den Speicher abgespeichert werden. Übersteigt der für eine gerade ankommende Nachrichtenzellen ermittelte aktuelle Zählerstand den festgelegten Zählerstand nicht, so wird diese Nachrichtenzelle weitergeleitet und der für diese Nachrichtenzelle ermittelte aktuelle Zählerstand sowie der Zeitpunkt der Ankunft dieser Nachrichtenzelle in dem Speicher abgespeichert. Für jede ankommende Nachrichtenzelle wird also ein Lese- und Schreibvorgang in dem Speicher PRAM und eine Rechenoperation in der Überwachungsausführungseinrichtung POCE ausgeführt. Der Zeitbedarf für die Ausführung eines jedesmaligen Überwachungsvorgangs steigt zum einen mit der Länge der zu verarbeitenden Zahlenwerte und zum andern, wenn Gleitoperationen ausgeführt werden müssen.

Erfindungsgemäß ist nun vorgesehen, daß der kürzeste zeitliche Abstand zweier aufeianderfolgender Nachrichtenzellen, die der gleichen virtuellen Verbindung angehören, durch den Quotienten zweier Zahlen dargestellt wird, wobei $t_{dn} = \frac{X}{Y}$ gegeben ist. Damit erhält die weiter oben dargestellte Gleichung zunächst folgende Struktur:

$$z_{na} = z_{na-1} - \frac{Y}{X}(t-t_{an}) + 1$$

Durch Multiplikation der gesamten Gleichung mit dem Wert X erhält die Gleichung schließlich folgende Struktur:

$$z_{na} \cdot X = z_{na-1} \cdot X - Y(t-t_{an}) + X$$

Durch geeignete Wahl des Wertes X wird eine Gleitkommadarstellung des nunmehr den aktuellen Zählerstand repräsentierenden Ausdrucks $z_{na} \cdot X$ vermieden.

Die überwachte Binärzeichenrate $B_{pol}$ möge um einen vorgebbaren Sicherheitsfaktor $f_s$, der z.B. ein Prozent beträgt, höher liegen als die jeweilige für eine virtuelle Verbindung eingerichtete Binärzeichenrate $B_{req}$. Damit ergibt sich die überwachte Binärzeichenrate mit $B_{Pol} = B_{req} \cdot (I + f_s)$. Durch die Berücksichtigung eines Sicherheitsfaktors wird möglichen Instabilitäten des Leaky-Bucket-Verfahrens entgegengewirkt. Ist die Nutzdatenrate des Nachrichtenzellenstroms bzw. des Übertragungssystems mit NB gegeben, wird für die Zahl Y ein fester Wert vorgegeben, so ergibt sich die Zahl X durch

$$X = \frac{Y \cdot NB}{f_s \cdot B_{req}}$$

wobei der Wert von X auf den nächstgelegenen ganzzahligen Wert gerundet wird.

In einer Überwachungseinrichtung kann es erforderlich sein, virtuelle Verbindungen mit einem weiten Bereich von Binärzeichenraten, z.B. zwischen 2,4 kbit/s und 120 Mbit/s, zu überwachen. Dieser weite Bereich, der im Ausführungsbeispiel fünf Größenordnungen überdeckt, bedingt einen großen Wertebereich und damit einen weiten Dynamikbereich des Wertes, der den kürzesten zulässigen zeitlichen Abstand zweier aufeinanderfolgender zur gleichen virtuellen Verbindung zugehörender Nachrichtenzellen bezeichnet. Die erfindungsgemäße Maßnahme, wonach der Wert, der dem kürzesten zulässigen zeitlichen Abstand zweier aufeinanderfolgender zur gleichen virtuellen Verbindung zugehörender Nachrichtenzellen entspricht, durch zwei Zahlenwerte dargestellt wird, die multiplikativ zueinander in Beziehung stehen, ermöglicht bei geeigneter Auswahl und Festlegung des einen Zahlenwertes zum einen eine ausreichende Granularität der überwachbaren Binärzeichenraten und zum andern eine erhebliche Reduzierung des Wertbereiches des anderen Zahlenwertes.

Die Abweichung err der jeweiligen überwachten Binärzeichenrate ergibt sich

$$\text{aus } err = \frac{B_{pol} - B_{req}}{B_{req}} = \frac{Y \cdot NB - X \cdot B_{req}}{X \cdot B_{req}}$$

wobei die Abweichung err ebensogroß sein sollte wie der Sicherheitsfaktor $f_s$.

Das erfindungsgemäße Verfahren sei am Beispiel eines Übertragungssystems mit einer Bruttodatenrate von 155 Mbit/s und einer Nutzdatenrate NB von 135Mbit/s für unterschiedliche Werte der Zahl Y näher betrachtet.

Wird die Zahl Y für sämtliche zu überwachenden Binärzeichenraten von 2,4 kbit/s bis 120 Mbit/s beispielsweise auf den Wert 16 festgesetzt, so erhält man für die nachfolgend angegebenen Binärzeichenraten $B_{req}$ die nachstehend genannten Werte der Zahl X und der sich ergebenden Abweichung err in Prozent.

| $B_{req}$ | X | Y | %err |
|---|---|---|---|
| 2.4 | 895259 | 16 | 1.000 |
| 16.0 | 134289 | 16 | 1.000 |
| 64.0 | 33572 | 16 | 1.001 |
| 144.0 | 14921 | 16 | 1.000 |
| 1,920.0 | 1119 | 16 | 1.007 |
| 10,000.0 | 215 | 16 | 0.935 |
| 34,368.0 | 63 | 16 | 0.227 |
| 68,736.0 | 31 | 16 | 1.844 |
| 120,000.0 | 18 | 16 | 0.468 |

Zur Abspeicherung werden dabei je virtueller Verbindung für den Wert der Zahl X 20 bits, für den Wert des Ausdrucks $X \cdot z_{na}$ 20 bits und für den Wert des durch den Ausdruck $X \cdot z_{max}$ gegebenen maximalen Zählerstandes 20 bits benötigt. Zur Abspeicherung dieser Werte sind also für jede virtuelle Verbindung 60 bits erforderlich.

Weist die Zahl Y in Abhängigkeit von der eingerichteten Binärzeichenrate zwei unterschiedliche Werte auf, beispielsweise für Binärzeichenwerte von 2,4 kbit/s bis 1 Mbit/s den Wert 1 und für Binärzeichenraten von 1 Mbit/s bis 120 Mbit/s den Wert 256 auf, so erhält man für die nachfolgend angegebenen Binärzeichenraten $B_{req}$ die nachstehend genannten Werte der Zahl X und der sich ergebenden Abweichung err in Prozent.

| $B_{req}$ | X | Y | %err |
|---|---|---|---|
| 2.4 | 55954 | 1 | 0.999 |
| 16.0 | 8393 | 1 | 1.001 |
| 64.0 | 2098 | 1 | 1.013 |
| 144.0 | 933 | 1 | 0.952 |
| 1,920.0 | 17905 | 256 | 1.001 |
| 10,000.0 | 3438 | 256 | 0.994 |
| 34,368.0 | 1000 | 256 | 1.029 |
| 68,736.0 | 500 | 256 | 1.029 |
| 120,000.0 | 286 | 256 | 1.170 |

Zur Abspeicherung werden dabei je virtueller Verbindung für den Wert der Zahl X 16 bits, für den Wert des Ausdrucks $X \cdot z_{na}$ 16 bits und für den Wert des durch den Ausdruck $X \cdot z_{max}$ gegebenen maximalen Zählerstandes 16 bits benötigt; zusätzlich wird 1 bit zur Auswahl des Wertes der Zahl Y benötigt. Zur Abspeicherung dieser Werte sind also für jede virtuelle Verbindung 49 bits erforderlich.

Im folgenden Beispiel weist die Zahl Y in Abhängigkeit von der eingerichteten Binärzeichenrate vier unterschiedliche Werte auf, wobei für die Zahl Y auch gebrochene Werte zulässig sind. Die Zahl Y weist für Binärzeichenraten von 2,4 kbit/s bis 100 kbit/s den Wert 1/64, für Binärzeichenraten von 100 kbit/s bis 4 Mbit/s den Wert 1, für Binärzeichenraten von 4 Mbit/s bis 50 Mbit/s den Wert 16 und für Binärzeichenraten von 50 Mbit/s bis 120 Mbit/s den Wert 64 auf. Man erhält für die nachfolgend angegebenen Binärzeichenraten die nachstehend genannten Werte für die Zahl X und die sich ergebende Abweichung err.

| $B_{req}$ | X | Y | %err |
|---|---|---|---|
| 2.4 | 874 | 0.016 | 1.032 |
| 16.0 | 131 | 0.016 | 1.109 |
| 64.0 | 33 | 0.016 | 0.343 |
| 144.0 | 933 | 1.000 | 0.952 |
| 1,920.0 | 70 | 1.000 | 0.916 |
| 10,000.0 | 215 | 16.000 | 0.935 |
| 34,368.0 | 63 | 16.000 | 0.227 |
| 68,736.0 | 125 | 64.000 | 1.029 |
| 120,000.0 | 72 | 64.000 | 0.468 |

Zur Abspeicherung sind für den Wert X 10 bits, für den Ausdruck $X \cdot z_{na}$ 11 bits, für den Ausdruck $X \cdot z_{max}$ 11 bits erforderlich. Zusätzlich werden 2 bits für die Auswahl des Wertes der Zahl Y benötigt. Zur Abspeicherung dieser Werte sind also für jede virtuelle Verbindung 34 bits erforderlich.

Zusammen mit dem Wert für den Zeitpunkt der Ankunft der letzten verbindungszugehörigen Nachrichtenzelle, der beispielsweise 14 bits erfordert, sind im letzten Fall, also für jede virtuelle Verbindung, unter Annahme einer Nutzbinärzeichenrate von 135 Mbit/s des Übertragungssystems 48 bits im Speicher der Überwachungseinrichtung erforderlich.

**Patentansprüche**

1. Verfahren zur Überwachung und Begrenzung der Binärzeichenrate einer virtuellen Verbindung in einem Übertragungssystem, in dem

   - einer Mehrzahl von virtuellen Verbindungen zugehörige Nachrichtenzellen nach einem asynchronen Übertragungsverfahren übertragen werden
   - jede Nachrichtenzelle eine festgelegte Anzahl von Binärzeichen aufweist
   - für jede virtuelle Verbindung eine Binärzeichenrate ($B_{req}$) eingerichtet ist
   - für jede virtuelle Verbindung ein Zählerstand vorgehalten wird
   - bei Ankunft einer Nachrichtenzelle für die virtuelle Verbindung, zu der diese Nachrichtenzelle gehört, ein aktueller Zählerstand gemäß dem Ausdruck

   $$z_{na} = z_{na-1} - \frac{t-t_{1n}}{t_{dn}} + 1$$

   ermittelt wird, wobei

   $z_{na}$ den aktuellen Zählerstand für die virtuelle Verbindung n

   $z_{na-1}$ den Zählerstand für die virtuelle Verbindung n vor Ankunft der gerade betrachteten Nachrichtenzelle

   $t$ den aktuellen Zeitpunkt

   $t_{ln}$ den Zeitpunkt der Ankunft der zur gleichen virtuellen Verbindung gehörigen, unmittelbar vorausgehenden Nachrichtenzelle

   $t_{dn}$ den kürzesten zulässigen zeitlichen Abstand zweier aufeinanderfolgender, zu der betrachteten virtuellen Verbindung gehöriger Nachrichtenzellen bezeichnet

- bei Überschreiten eines festgelegten Zählerstandes durch den aktuellen Zählerstand die gerade betrachtete Nachrichtenzelle verworfen wird
- bei Nicht-Überschreiten des festgelegten Zählerstandes durch den aktuellen Zählerstand die gerade betrachtete Nachrichtenzelle weitergeleitet wird,

**dadurch gekennzeichnet** , daß zur Abspeicherung des kürzesten zulässigen zeitlichen Abstandes zweier zur gleichen virtuellen Verbindung gehörender Nachrichtenzellen zwei Speicherplätze vorgesehen sind, in deren einem ein Vielfaches des kürzesten zulässigen zeitlichen Abstandes gespeichert ist und in deren anderem der Quotient aus diesem Vielfachen und dem kürzesten zulässigen zeitlichen Abstand selbst gespeichert ist, und daß bei der Ermittlung des aktuellen Zählerstandes zur Darstellung des kürzesten zulässigen Abstandes der Quotient beider Speicherinhalte gebildet wird.

2. Verfahren nach Anspruch 1,
**dadurch gekennzeichnet**, daß die in den Speicherplätzen abgespeicherten Zahlenwerte ganzzahlig sind.

3. Verfahren nach Anspruch 1 oder 2,
**dadurch gekennzeichnet**, daß der Wert zumindest einer der in den Speicherplätzen abgespeicherten Zahlen als Zahl mit Basis 2 und ganzzahligem Exponenten darstellbar ist.

4. Verfahren nach einem der vorstehenden Ansprüche,
**dadurch gekennzeichnet**, daß die in den Speicherplätzen abgespeicherten Zahlen jeweils eine binär strukturierte Form aufweisen.

5. Verfahren nach einem der vorstehenden Ansprüche,
**dadurch gekennzeichnet**, daß eine der in den Speicherplätzen abgespeicherten Zahlen für unterschiedliche Wertebereiche der Binärzeichenrate jeweils einen festen Wert aufweist.

**Claims**

1. Method for monitoring and limiting the binary character rate of a virtual connection in a transmission system, in which

- information cells associated with a plurality of virtual connections are transmitted according to an asynchronous transfer method
- each information cell has a fixed number of binary characters

- a binary character rate ($B_{req}$) is set up for each virtual connection
- a counter reading is kept for each virtual connection
- when an information cell arrives for the virtual connection with which this information cell is associated, a current counter reading is determined in accordance with the expression

$$z_{na} = z_{na-1} - \frac{t-t_{1n}}{t_{dn}} + 1$$

where

$z_{na}$ designates the current counter reading for the virtual connection n

$z_{na-1}$ designates the counter reading for the virtual connection n before the arrival of the information cell currently under consideration

$t$ designates the current time

$t_{1n}$ designates the time of arrival of the directly preceding information cell associated with the same virtual connection

$t_{dn}$ designates the shortest permissible time interval between two successive information cells associated with the virtual connection under consideration.

- the information cell currently under consideration is rejected when the current counter reading exceeds a specified counter reading
- the information cell currently under consideration is passed on when the current counter reading does not exceed the specified counter reading, characterized in that, in order to store the shortest, permissible time interval between two information cells which are associated with the same virtual connection, two memory locations are provided, in one of which a multiple of the shortest permissible time interval is stored, and in the other of which the quotient of this multiple and the shortest permissible time interval itself is stored, and in that, when the current counter reading is determined, the quotient of the two memory contents is formed in order to represent the shortest permissible interval.

2. Method according to Claim 1, characterized in that the numerical values which are stored in the memory locations are integral.

3. Method according to Claim 1 or 2, characterized in that the value of at least one of the numbers stored in the memory locations can be represented as a base-2 number and an integral exponent.

4. Method according to one of the preceding claims, characterized in that the numbers which are stored in the memory locations are each of a binary-structured form.

5. Method according to one of the preceding claims, characterized in that one of the numbers stored in the memory locations has, in each case, a fixed value for different value ranges of the binary character rate.

**Revendications**

1. Procédé pour surveiller et limiter le débit de signes binaires d'une liaison virtuelle dans un système de transmission, dans lequel

   - on transmet suivant un procédé de transmission asynchrone des cellules d'information appartenant à une pluralité de lignes virtuelles,
   - chaque cellule d'information a un nombre déterminé de signes binaires,
   - on établit un débit ($B_{req}$) de signes binaires pour chaque liaison virtuelle,
   - on réserve un état de compteur pour chaque liaison virtuelle,
   - à l'arrivée d'une cellule d'information, on détermine pour la liaison virtuelle à laquelle appartient la cellule d'information un état de compteur instantané suivant l'expression

   $$z_{na} = z_{na-1} - \frac{t - t_{1n}}{t_{dn}} + 1$$

   $z_{na}$ désignant l'état de compteur instantané pour la liaison n virtuelle,

   $z_{na-1}$ désignant l'état de compteur pour la ligne n virtuelle avant l'arrivée de la cellule d'information justement considérée,

   $t$ désignant l'instant présent,

   $t_{1n}$ désignant l'instant de l'arrivée de la cellule d'information appartenant à la même ligne virtuelle et immédiatement précédente,

   $t_{dn}$ désignant l'intervalle de temps autorisé le plus bref entre deux cellules d'information successives, appartenant à la liaison virtuelle considérée.

   - Lorsque l'état de compteur instantané est supérieur à un état de compteur fixé, la cellule d'information justement considérée est rejetée,
   - Lorsque l'état de compteur instantané n'est pas supérieur à l'état de compteur fixé, la cellule d'information justement considérée est transmise,

   caractérisé en ce que, pour mettre en mémoire l'intervalle de temps autorisé le plus bref entre deux cellules d'information appartenant à la même liaison virtuelle, on prévoit deux emplacements de mémoire, un multiple de l'intervalle de temps autorisé le plus bref étant mis en mémoire dans l'une d'entre elles, et le quotient de ce multiple et de l'intervalle de temps autorisé le plus bref lui-même étant mémorisé dans l'autre, et en ce que l'on forme le quotient des deux contenus de mémoire lors de la détermination de l'état de compteur instantané pour représenter l'intervalle autorisé le plus bref.

2. Procédé suivant la revendication 1, caractérisé en ce que les valeurs numériques mises en mémoire aux emplacements de mémoire sont des nombres entiers.

3. Procédé suivant la revendication 1 ou 2, caractérisé en ce que la valeur d'au moins un des nombres mis en mémoire aux emplacements de mémoire peut être représenté comme un nombre à base 2 et à exposant entier.

4. Procédé suivant l'une des revendications précédentes, caractérisé en ce que les nombres mis en mémoire aux emplacements de mémoire ont chacun une forme à structure binaire.

5. Procédé suivant l'une des revendications précédentes, caractérisé en ce que l'un des nombres mis en mémoire aux emplacements de mémoire a une valeur fixe pour des intervalles différents de valeurs du débit de signes binaires.